# EUROPEAN PATENT SPECIFICATION

(11) **EP 1 220 408 B1**
(45) Date of publication and mention of the grant of the patent: **26.10.2005**
(21) Application number: 00403614.1
(22) Date of filing: 20.12.2000
(51) Int. Cl.: H02G 15/18, H02G 15/103, H02G 15/184

(54) **Cable adapter**
Kabeladapter
Adaptateur de câble

(43) Date of publication of application: 03.07.2002
(73) Proprietor: Nexans, 75008 Paris (FR)
(72) Inventor: Cardinaels, Josef Renier Catharina, 9230 Wetteren (BE)
(74) Representative: Feray, Valérie

(56) References cited:
- CHEENNE-ASTORINO A ET AL: "COLD SHRINKABLE TECHNOLOGY FOR MEDIUM VOLTAGE CABLE ACCESSORY" IEEE TRANSMISSION AND DISTRIBUTION CONFERENCE PROCEEDINGS,US,NEW YORK, IEEE, 15 September 1996 (1996-09-15), pages 386-390, XP000691613 ISBN: 0-7803-3523-6

## Description

The present invention relates to a tubular cable adapter for terminating a medium voltage paper insulated cable, comprising an insulating sleeve, a conductive metal member covering at least partially said insulating sleeve, and a support member for maintaining said insulating sleeve and said conductive metal member in a radial expanded state, said support member being removable from said insulating sleeve and said conductive metal member.

When a medium voltage cable, and more particularly a paper insulated cable, e.g. a 3-phase paper insulated "Mineral Insulated Non Draining" type cable with common lead sheath, needs to be connected, terminated or jointed, by means of accessories normally used for polymeric insulated "dry" cables, it is current practice to apply a barrier layer over the paper insulating layers. This barrier layer seals the impregnating compound inside the paper layers, protects the paper-insulated cable and provides the same interface as for a dry cable on which the accessories can then be built.

In the present state of the art, there are three known solutions to provide such a barrier layer:
- applying a layer of oil resistant tape such as polyester, nylon, silicone rubber or the like;
- applying a layer of heat shrink barrier sleeve; or
- using a cold shrinkable tubular cable adapter as for instance known from the European Patent Application EP-A1-0 780 949 entitled "Universal cable adapter, cable joint using the adapter and method of making same" of the "Minnesota Mining and Manufacturing Company" (3M™), first filed EP-95203627 on 23.12.1995.

In these know solutions, once the barrier layer has been applied over the paper insulation, several additional layers of different materials have to be applied one after the other to electrically shield, environmentally seal and re-insulate the cores of a paper insulated cable.

A tubular cable adapter comprising the features of the preamble of appended claim 1 is described in a publication of CHEENNE-ASTORINO A ET AL: "COLD SHRINKABLE TECHNOLOGY FOR MEDIUM VOLTAGE CABLE ACCESSORY" IEEE TRANSMISSION AND DISTRIBUTION CONFERENCE PROCEEDINGS,US,NEW YORK, IEEE, 15 September 1996 (1996-09-15). pages 386-390.

An object of the present invention is to provide a tubular cable adapter of the above last known type but adapted to substantially reduce the cost and the installation time for a cable termination or a cable connection on a paper insulated cable.

According to the invention, this object is achieved by a tubular cable adapter as specified in appended claim 1.

In this way, a cold-shrinkable adapter sleeve with all the necessary elements pre-expanded together on a single support element is provided. This single tubular cable adapter may be used as a full barrier layer to seal and protect a paper-insulated cable and to provide the same interface as for a dry cable in one step. The portion of the insulating sleeve not covered by the semi-conductive layer facilitates this interface with the known accessories. The invention thus allows a faster installation because of the less number of parts and less possibility of mistakes. It is also less expensive as the above known third solution since less support elements are required.

Another characterizing embodiment of the present invention is that said conductive metal member is exposed at each end of said outer protective sleeve.

In this way, when shrunk on the cable after having removed the support element, the conductive metal member can be brought into electrical contact with a lead sheath of the cable on one side and with the metallic shielding device of the accessory on the other side. The conductive metal member thus insures the shielding continuity of the cable.

Also another characterizing embodiment of the present invention is that said conductive metal member and said insulating sleeve are both exposed at one end of said support member.

In this way, the termination created on a paper-insulated cable with the present cable adapter is fully similar to that of a dry cable prepared for a cable termination or for a cable connection.

Yet another characterizing embodiment of the present invention is that said support member is a support tube whereon said insulating sleeve is adapted to slide.

The support element disclosed in the above-mentioned European Patent Application is made of a plastic wired spiral. The insulating sleeve is shrunk onto the cable by unwinding and pulling one end of the spiral, from the opposite end of the support element. Because of the shrinking insulating sleeve, the wire of the spiral is pressed against the cable over all the length of the tubular cable adapter. This contact between the moving plastic wire and the cable may damage the paper layers. Using a tube that slides from under the insulating sleeve largely reduces the risk of damaging. Such a tube is for instance described in the European Patent EP-B-0 631 357 entitled "Tubular support for mounting an elastic shrinkable sleeve" of Euromold (Belgium), first filed FR-19930007774 on 25.06.1993, and will therefore not be detailed further here.

A method for making a tubular cable adapter for terminating a medium voltage paper insulated cable is also disclosed.

A further object is to provide a method particularly suitable for making the above new tubular cable adapter.

This further object is achieved due to the fact that said method comprises the steps of
- providing an insulating sleeve of silicone rubber;
- applying a layer of semi-conductive rubber over a part of the length of said insulating sleeve and chemically bonding said layer of semi-conductive rubber with said silicone rubber;
- expanding the cold shrinkable adapter sleeve formed by said insulating sleeve and said layer of semi-conductive rubber on a support member;
- covering the expanded adapter sleeve by a conductive metal member over at least part of its length; and
- covering said conductive metal member with an outer protective sleeve, at least partially over the location of said layer of semi-conductive rubber.

In this way, all the necessary elements for making a cold-shrinkable adapter sleeve, e.g. for a paper-insulated cable, are pre-expanded together on a single support element. The adapter sleeve is thereby faster to install, with less possibility of mistakes. The installation time is also relatively short, whereby the installation cost is reduced.

Further characterizing embodiments of the present tubular cable adapter are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

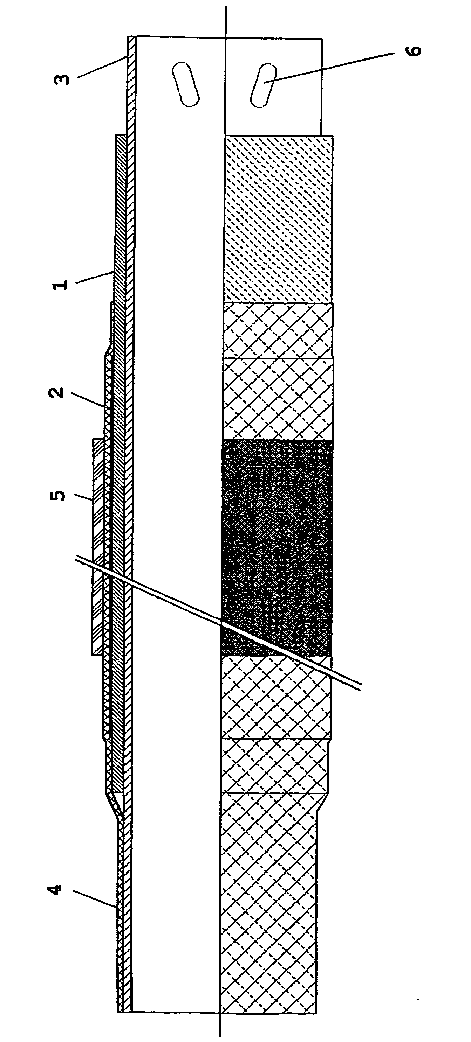

The above and other objects and features of the invention will become more apparent and the invention itself will be best understood by referring to the following description of an embodiment taken in conjunction with the accompanying drawings wherein the figure represents a longitudinal view of the tubular cable adapter according to the invention, with the upper part partially removed to show the different layers constituting the adapter. The middle part of the adapter is cut away in the figure because only the ends thereof are important to explain the invention.

Paper insulated cables for medium voltage applications of 10 kV to 30 kV most often are of 3-core design , i.e. 3 paper-insulated conductors are housed inside a common metallic shield, e.g. a lead sheath. Each of these insulated conductors can have an electrical screening layer, generally made of metalized paper (so called individually screened cable) or not (belted cable).

A cable adapter is used to transform the end of each core of such cables into a so-called "dry" cable end. The present cable adapter provides, on each cable-core end, an insulating sleeve 1. The insulating sleeve 1 is preferably made of silicone rubber, covered by a semi-conductive layer 2 over part of its length, itself covered by a conductive metal member 4. The whole being, at least partially, covered by an outer protective sleeve 5 made of silicone or of any other suitable rubber material.

To build a termination on, for instance, a 3-phase cable, starting from a break-out, a distinct insulation sleeve 1 is first placed on each core. It is to be noted that, if the core is provided with an individual screen, this has to be removed first over a certain distance. Then, also on each core, a semi-conductive layer 2 is applied with the goal of keeping the electrical field inside the cable. Over this semi-conductive layer 2, a metallic stocking 4 is installed serving as fault current carrier and protection. Finally, an outer protective sleeve 5 is installed to seal and insulate the assembly. All these operations are performed in a single step owing to the cold-shrinkable tubular cable adapter shown on the figure.

The present cable adapter is built in the following way.

An insulating sleeve 1 of extruded silicone rubber is covered by a layer of semi-conductive silicone rubber 2, applied over a part of its length and chemically bonded thereto. Together, they form a cold shrinkable adapter sleeve that will be expanded and installed on a support member 3.

In this status, a part of the adapter sleeve is covered by a conformable conductive metal member that is generally a copper stocking 4, also called "stockingette", and which extends beyond the adapter sleeve, at the left on the figure.

The stocking 4 is in turn covered by an outer protective rubber sleeve 5. On both ends of the sleeve 5, parts of the stocking remain uncovered to be able to make electrical contacts.

During installation, the left free end of the stocking 4 is folded back over the outer protective sleeve 5, the support member 3 is then slid over the paper insulated cable core so that the left end of the insulating sleeve 1 is positioned as close as possible to the break out of the cable (not shown). The support member or tube 3 is then pulled to the right from under the silicone rubber sleeve 1 by means of a hook fitting in the holes 6 provided at the right end of the tube 3. By removing the tube, the whole assembly, i.e. the cold-shrinkable adapter sleeve, is allowed to shrink onto the cable core transforming thereby the paper insulated cable core into a polymeric insulated cable, i.e. a dry cable.

The left end of the stocking 4 is now folded over the lead sheath of the cable in order to be brought into electrical contact therewith, allowing so the continuity of the shielding of the cable.

When adapter sleeves are installed on the three cores of the 3-core cable, and the stockings are interconnected to the metallic sheath of the cable, a sealing trifurcating glove (not shown) is installed over the break out area. The fingers of this glove partially cover the left end of the outer protective sleeve 5.

At the right side of the adapter sleeves installed on the cable cores, the free ends of the metal stockings 4 are now folded back over the right ends of the outer protective sleeves 5. Hereby the ends of the insulating sleeve 1 and of the semi-conductive layer 2 become exposed over a certain length.

In this way, the oil filled paper insulated 3-phase cable has turned, in a few simple steps, into an individually phase-shielded polymeric insulated cable on which standard accessories can be installed.

It is to be noted that the present tubular cable adapter has mainly been described above for providing a termination of a cable end, but that it may also easily be used for other applications such as for instance a cable connection or a transition joint.

While the principles of the invention have been described above in connection with specific apparatus, it is to be clearly understood that this description is made only by way of example and not as a limitation on the scope of the invention, as defined in the appended claims.

## Claims

1. A tubular cable adapter for terminating a medium voltage paper insulated cable, comprising an insulating sleeve (1), a conductive metal member (4), a semi-conductive layer (2) located between said insulating sleeve (1) and said conductive metal member (4), and a support member (3) for maintaining said insulating sleeve and said conductive metal member in a radial expanded state, said support member being removable from said insulating sleeve and said conductive metal member,
**characterized in that** said tubular cable adapter further comprises an outer protective sleeve (5) covering partially said conductive metal member, and **in that** said conductive metal member (4) covers partially said insulating sleeve (1) and a portion of said insulating sleeve (1) is not covered by said semi-conductive layer (2).

2. The cable adapter according to claim 1, **characterized in that** said conductive metal member (4) is exposed at each end of said outer protective sleeve (5).

3. The cable adapter according to claim 2, **characterized in that** said outer protective sleeve (5) is adapted for covering a part of the length of said conductive metal member (4) located over said semi-conductive layer (2).

4. The cable adapter according to claim 1, **characterized in that** said conductive metal member (4) and said insulating sleeve (1) are both exposed at one end of said support member (3).

5. The cable adapter according to claim 1, **characterized in that** said support member (3) is a support tube whereon said insulating sleeve (1) is adapted to slide.

6. The cable adapter according to claim 1, **characterized in that** said conductive metal member (4) extends beyond said insulating sleeve (1) and covers said semi-conductive layer (2).

7. The cable adapter according to claim 1, **characterized in that** said conductive metal member (4) is a copper stocking.

8. The cable adapter according to claim 1, **characterized in that** said insulating sleeve (1) is a silicone rubber sleeve,
**in that** said semi-conductive layer (2) is made of semi-conductive silicone rubber,
and **in that** said insulating sleeve with said semi-conductive layer together form a cold shrinkable adapter sleeve expanded on said support member (3).

## Patentansprüche

1. Rohrförmiger Kabeladapter zum Begrenzen eines mit Papier isolierten Mittelspannungskabels mit einer Isolierhülse (1), einem leitenden Metallelement (4), einer halbleitenden Schicht (2), die zwischen der Isolierhülse (1) und dem leitenden Metallelement (4) angeordnet ist, und einem Trägerelement (3), um die Isolierhülse und das leitende Metallelement in einem radial ausgedehnten Zustand zu halten, wobei das Trägerelement von der Isolierhülse und dem leitenden Metallelement entfernbar ist; **dadurch gekennzeichnet, dass** der rohrförmige Kabeladapter weiter eine äußere Schutzhülle aufweist, welche teilweise das leitende Metallelement bedeckt, und **dadurch**, dass das leitende Metallelement (4) teilweise die Isolierhülse (1) bedeckt und ein Teil der Isolierhülse (1) nicht von der halbleitenden Schicht (2) bedeckt ist.

2. Kabeladapter gemäß Anspruch 1, **dadurch gekennzeichnet, dass** das leitende Metallelement (4) an jedem Ende der äußeren Schutzhülle (5) bloßgelegt ist.

3. Kabeladapter gemäß Anspruch 2, **dadurch gekennzeichnet, dass** die äußere Schutzhülle (5) angepasst ist, um einen Teil der Länge des leitenden Metallelements (4), das über der halbleitenden Schicht (2) angeordnet ist, zu bedecken.

4. Kabeladapter gemäß Anspruch 1, **dadurch gekennzeichnet, dass** sowohl das leitende Metallelement (4) als auch die Isolierhülse (1) an einem Ende des Trägerelements bloßgelegt sind.

5. Kabeladapter gemäß Anspruch 1, **dadurch gekennzeichnet, dass** das Trägerelement (3) ein Trägerrohr ist, auf welchem die Isolierhülse gleiten kann.

6. Kabeladapter gemäß Anspruch 1, **dadurch gekennzeichnet, dass** sich das leitende Metallelement (4) über die Isolierhülse (1) hinaus erstreckt und die halbleitende Schicht (2) bedeckt.

7. Kabeladapter gemäß Anspruch 1, **dadurch gekennzeichnet, dass** das leitende Metallelement (4) ein Kupferstrumpf ist.

8. Kabeladapter gemäß Anspruch 1, **dadurch gekennzeichnet, dass** die Isolierhülse (1) eine Silikonkautschukhülse ist, **dadurch**, dass die halbleitende Schicht (2) aus halbleitendem Silikonkautschuk ist, und **dadurch**, dass die Isolierhülse und die halbleitende Schicht zusammen eine kaltschrumpfende Adapterhülso bilden, die auf dem Trägerelement ausgedehnt ist.

## Revendications

1. Adaptateur de câble tubulaire pour la terminaison d'un câble isolé au papier moyenne tension, comprenant un manchon isolant (1), un élément de métal conducteur (4), une couche semi-conductrice (2) située entre ledit manchon isolant (1) et ledit élément de métal conducteur (4) et un élément de support (3) pour maintenir ledit manchon isolant et ledit élément de métal conducteur dans un état radialement dilaté, ledit élément de support étant amovible depuis ledit manchon isolant et ledit élément de métal conducteur,
**caractérisé en ce que** ledit adaptateur de câble tubulaire comprend en outre un manchon protecteur externe (5) recouvrant partiellement ledit élément de métal conducteur, et **en ce que** ledit élément de métal conducteur (4) recouvre partiellement ledit manchon isolant (1) et une partie dudit manchon isolant (1) n'est pas recouverte par ladite couche semi-conductrice (2).

2. Adaptateur de câble selon la revendication 1, **caractérisé en ce que** ledit élément de métal conducteur (4) est exposé à chaque extrémité dudit manchon protecteur externe (5).

3. Adaptateur de câble selon la revendication 2, **caractérisé en ce que** ledit manchon protecteur externe (5) est adapté pour recouvrir une partie de la longueur dudit élément de métal conducteur (4) situé par dessus ladite couche semi-conductrice (2).

4. Adaptateur de câble selon la revendication 1, **caractérisé en ce que** ledit élément de métal conducteur (4) et ledit manchon isolant (1) sont tous deux exposés à une extrémité dudit élément de support (3).

5. Adaptateur de câble selon la revendication 1, **caractérisé en ce que** ledit élément de support (3) est un tube de support sur lequel ledit manchon isolant (1) est adapté pour coulisser.

6. Adaptateur de câble selon la revendication 1, **caractérisé en ce que** ledit élément de métal conducteur (4) s'étend au-delà dudit manchon isolant (1) et recouvre ladite couche semi-conductrice (2).

7. Adaptateur de câble selon la revendication 1, **caractérisé en ce que** ledit élément de métal conducteur (4) est une chaussette en cuivre.

8. Adaptateur de câble selon la revendication 1, **caractérisé en ce que** ledit manchon isolant (1) est un manchon de caoutchouc silicone,
**en ce que** ladite couche semi-conductrice (2) est constituée de caoutchouc silicone semi-conducteur,
et **en ce que** ledit manchon isolant avec ladite couche semi-conductrice forment conjointement un manchon adaptateur rétrécissable à froid dilaté sur ledit élément de support (3).
